# EUROPEAN PATENT SPECIFICATION

(11) **EP 2 074 332 B1**
(45) Date of publication and mention of the grant of the patent: **29.06.2011**
(21) Application number: 07804165.4
(22) Date of filing: 10.09.2007
(51) Int. Cl.: F16B 29/00, F16B 37/06, F16B 5/02, F16B 35/04

(54) **MOUNTING ARRANGEMENT**
BEFESTIGUNGSANORDNUNG
DISPOSITIF DE MONTAGE

(30) Priority: 06.10.2006 GB 0619741
(43) Date of publication of application: 01.07.2009
(73) Proprietor: ROLLS-ROYCE PLC, London, SW1E 6AT (GB)
(72) Inventor: BISHOP, JEFFREY CHARLES, DERBY DE65 6BU (GB)
(74) Representative: Barcock, Ruth Anita
(86) International application number: PCT/GB2007/003364
(87) International publication number: WO 2008/040932

(56) References cited:
- WO-A-03/106850
- WO-A-2005/052389
- DE-A1- 3 715 204
- US-A- 4 525 912

## Description

This invention concerns mounting arrangements, and particularly but not exclusively mounting arrangements for sheet components.

On bolts there is usually an underhead blend radius or underhead blend portion between the bolt head and the bolt shank. This blend portion provides a stress relieving transition zone between the head and shank. When using such a bolt in a hole, steps are usually taken to prevent continuous hard contact between the hole edge and the blend portion.

One way of achieving this is to provide a washer. This however means that extra components are required increasing the part count and also potentially increasing weight. Moreover the bolt head will be raised up slightly relative to the component.

A further existing approach is to use a chamfered hole, such that the blend portion is received within the chamfer to substantially prevent contact between the hole edge and the blend portion. Providing such a chamfer involves a secondary manufacturing operation. In practice this operation is often carried out by hand meaning that different sizes of chamfer are often produced. This can significantly affect bolt tension in use due to the differences in frictional-torque between the underside of the bolt head and the surface surrounding a hole, resulting from the variations in mean friction-torque radius. This means that for a set torque tightening, different fixing tensions will be achieved dependent on the degree of chamfering of a hole.

According to the present invention there is provided a mounting arrangement for a component, the arrangement including a bolt with a head, shank and an underhead blend portion therebetween, and a substantially cylindrical hole in a face of the component into which hole the bolt shank is locatable, the hole having a diameter such that the bolt shank is slideably locatable therein and the underhead blend portion can be wholly contained therein, three or more spaced projections are provided extending generally radially into the hole from the circumference thereof, the projections being configured such that the underhead blend portion is engageable therewith when the shank is fully located in the hole.

The projections may be configured such that when the bolt head is urged towards the component the projections will be plastically deformed by the underhead blend portion engaging thereagainst such that the underside of the bolt head can engage against the component face around the hole.

The projections may have a substantially constant cross section along the length of the hole.

The projections may be substantially equispaced around the circumference of the hole.

Four projections may be spaced around the circumference of the hole.

The projections may be substantially identical to each other.

The hole and projections may be formed by any of laser cutting, wire cutting or punching.

The invention also provides a mounting arrangement for a sheet component, the mounting arrangement being according to any of the preceding seven paragraphs.

An embodiment of the present invention will now be described by way of example only and with reference to the accompanying drawings, in which: -
Fig. 1 is a diagrammatic part cross sectional view through a prior art mounting arrangement during assembly;
Fig. 2 is a similar view to Fig. 1 but with the arrangement fully assembled;
Fig. 3 is a diagrammatic plan view through part of the prior art mounting arrangement;
Fig. 4 is a diagrammatic cross sectional side view through part of the prior art mounting arrangement;
Figs. 5 and 6 are similar views to Figs. 1 and 2 but of a mounting arrangement according to the invention, and with an additional component shown in Fig. 5; and
Figs. 7 and 8 are similar views to Figs. 3 and 4 but of the mounting arrangement of Figs. 5 and 6, and with Fig. 8 being a view along the line A-A in Fig. 7.

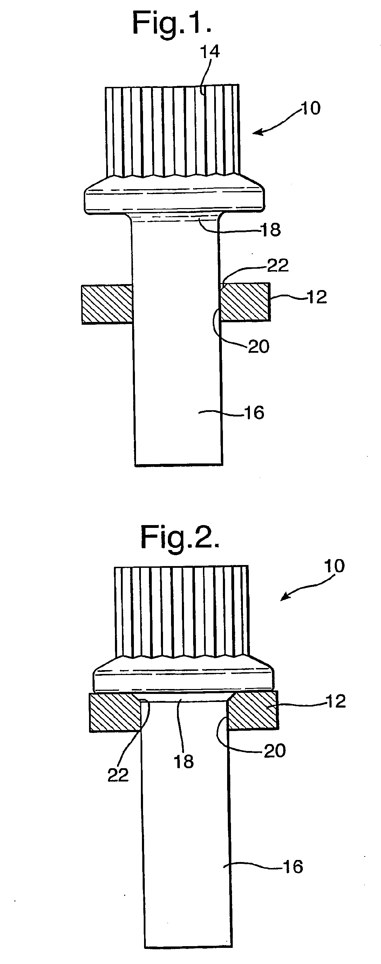

Figs. 1-4 diagrammatically illustrate a conventional mounting arrangement incorporating a bolt 10 mounted to a plate 12. The bolt has a head 14 with an appropriate formation to permit turning thereof and a shank 16. An underhead blend portion 18 is extends around the shank 16 beneath the head 14 to provide a stress relief transition zone between the head 14 and shank 16.

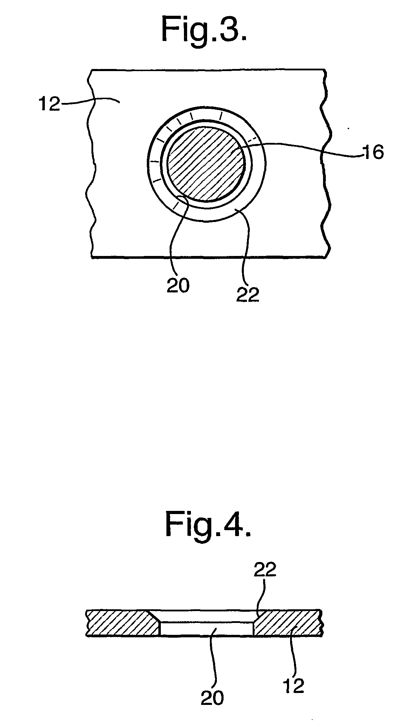

A cylindrical hole 20 is provided through the plate 12 and a chamfer 22 is provided around the upper part of the hole 20.The chamfer 22 receives the blend portion 18 when the head 14 engages against the plate 12. The chamfer 22 would often be formed by hand such that a relatively small chamfer 22 may be provided as shown for instance in Fig. 1 or a relatively large chamfer 22 as shown in Fig. 4.

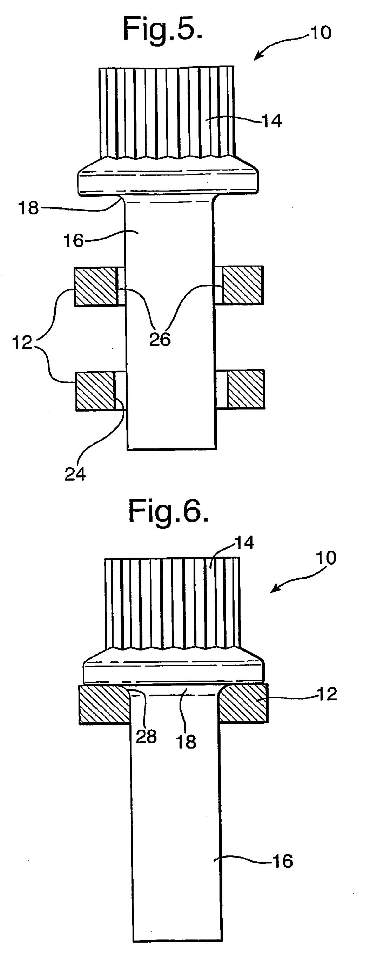

Figs. 5-8 show a mounting arrangement according to the invention. This arrangement includes an identical bolt 10 to that in the conventional arrangement. In this arrangement a larger cylindrical hole 24 is provided in the plate 12, and is of a diameter to fully receive the shank 16 including the blend portion 18. The size of the hole 24 is chosen to provide control over the allowable eccentricity of the shank 16 within the hole 24.

Four substantially semi-circular equispaced projections 26 extend into the hole 24 for the whole depth thereof. The projections 26 are of a size to permit the shank 16 to pass therebetween, but for the blend portion 18 to engage thereagainst when the head 14 is brought against the plate 12. In practice as the head 14 is brought against the plate 12 the projections 26 will be plastically deformed, as shown at 28 (Fig. 6), by the blend portion 18 engaging thereagainst such that the underside of the head 14 engages fully against the plate 12 around the hole 24.

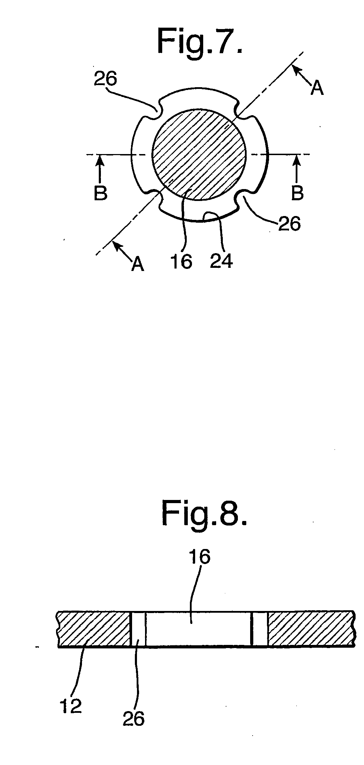

In Fig. 5 two plates 12 are diagrammatically shown, an upper plate 12 being along the line A to A in Fig. 7 and a lower plate being along the line B to B in Fig. 7.

This arrangement provides for a number of advantages. For instance, the hole including the projections can be formed in a single straightforward manufacturing technique such as laser cutting, wire cutting or punching. No additional components such as washers are required. These features reduce manufacturing time and cost.

This arrangement means that the area under the bolt head can be accurately predicted in both size and position and repeated in a number of arrangements. This means that consistent bolt tensions can be achieved from the same torque tightening of a number of bolts. This greater reliability in torque to tension conversion may permit the total number of fixings or fixing sizes to be reduced. This can provide weight reduction and/or reduced build time. If fixing sizes are reduced this can lead to increased strain energy and a decreased risk of loss of fixing tension over time, providing greater integrity of mounting.

Various modifications may be made without departing from the scope of the invention. For example a different number of projections may be provided. Alternatively or in addition, the projections may be differently shaped and of relative sizes relative to the hole.

## Claims

1. A mounting arrangement for a component, the arrangement including a bolt (10) with a head (14), shank (16) and an underhead blend portion (18) therebetween, and a substantially cylindrical hole (24) in a face of the component (12) into which hole (24) the bolt shank (16) is locatable, the hole (24) having a diameter such that the bolt shank (16) is slideably locatable therein and the underhead blend portion (18) can be wholly contained therein, **characterised in that** three or more spaced projections (26) are provided extending generally radially into the hole (24) from the circumference thereof, the projections (26) being configured such that the underhead blend portion (18) is engageable therewith when the shank (16) is fully located in the hole (24).

2. A mounting arrangement according to claim 1, **characterised in that** the projections (26) are configured such that when the bolt head (14) is urged towards the component (12) the projections (26) will be plastically deformed by the underhead blend portion (18) engaging thereagainst such that the underside of the bolt head (14) can engage against the component face (12) around the hole (24).

3. A mounting arrangement according to claim 1 or 2, **characterised in that** the projections (26) have a substantially constant cross section along the length of the hole (24).

4. A mounting arrangement according to any of claims 1 to 3, **characterised in that** the projections (26) are substantially equispaced around the circumference of the hole (24).

5. A mounting arrangement according to any of the preceding claims, **characterised in that** four projections (26) are spaced around the circumference of the hole (24).

6. A mounting arrangement according to any of the preceding claims, **characterised in that** the projections (26) are substantially identical to each other.

7. A mounting arrangement according to any of the preceding claims, **characterised in that** the hole (24) and projections (26) are formed by laser cutting.

8. A mounting arrangement according to any of claims 1 to 6, **characterised in that** the hole (24) and projections (26) are formed by wire cutting.

9. A mounting arrangement according to any of claims 1 to 6, **characterised in that** the hole (24) and projections (26) are formed by punching.

10. A mounting arrangement for a sheet component (12), the mounting arrangement being according to any of the preceding claims.

## Patentansprüche

1. Befestigungsanordnung für ein Bauteil, wobei die Anordnung eine Schraube (10) mit einem Kopf (14), einem Schaft (16) und einem zwischen diesen angeordneten, unter dem Kopf liegenden Übergangsteil (18) sowie ein im Wesentlichen zylindrisches Bohrloch (24) in einer Fläche des Bauteils (12) einschließt, wobei der Schrauben-Schaft (16) in diesem Bohrloch (24) anzuordnen ist, wobei das Bohrloch (24) einen Durchmesser derart aufweist, dass der Schrauben-Schaft (16) verschiebbar in diesem anzuordnen ist und der unter dem Kopf liegende Übergangsteil (18) vollständig darin enthalten sein kann, **dadurch gekennzeichnet, dass** drei oder mehr mit Abstand angeordnete Vorsprünge (26) vorgesehen sind, die sich allgemein radial in das Bohrloch (24) von dessen Umfang aus erstrecken, wobei die Vorsprünge (26) so konfiguriert sind, dass der unter dem Kopf liegende Übergangsteil (18) hiermit in Eingriff bringbar ist, wenn der Schaft (16) vollständig in dem Bohrloch (24) liegt.

2. Befestigungsanordnung nach Anspruch 1, **dadurch gekennzeichnet, dass** die Vorsprünge (24) derart konfiguriert sind, dass wenn der Schrauben-Kopf (14) gegen das Bauteil (12) gedrückt wird, die Vorsprünge (26) durch den unter dem Kopf liegenden Übergangsteil (18), der gegen diese in Eingriff kommt, plastisch verformt werden, derart, dass die Unterseite des Schrauben-Kopfes (14) mit der Bauteil-Fläche (12) um das Bohrloch (24) herum in Eingriff kommen kann.

3. Befestigungsanordnung nach Anspruch 1 oder 2, **dadurch gekennzeichnet, dass** die Vorsprünge (26) einen im Wesentlichen konstanten Querschnitt entlang der Länge des Bohrloches (24) aufweisen.

4. Befestigungsanordnung nach einem der Ansprüche 1 bis 3, **dadurch gekennzeichnet, dass** die Vorsprünge (26) im Wesentlichen mit gleichen Abständen um den Umfang des Bohrloches (24) herum verteilt sind.

5. Befestigungsanordnung nach einem der vorhergehenden Ansprüche, **dadurch gekennzeichnet, dass** vier Vorsprünge (26) mit Abstand um den Umfang des Bohrloches (24) herum angeordnet sind.

6. Befestigungsanordnung nach einem der vorhergehenden Ansprüche, **dadurch gekennzeichnet, dass** die Vorsprünge (26) im Wesentlichen zueinander identisch sind.

7. Befestigungsanordnung nach einem der vorhergehenden Ansprüche, **dadurch gekennzeichnet, dass** das Bohrloch (24) und die Vorsprünge (26) durch Laser-Schneiden gebildet sind.

8. Befestigungsanordnung nach einem der Ansprüche 1 bis 6, **dadurch gekennzeichnet, dass** das Bohrloch (24) und die Vorsprünge (26) durch Funkenerosions-Schneiden gebildet sind.

9. Befestigungsanordnung nach einem der Ansprüche 1 bis 6, **dadurch gekennzeichnet, dass** das Bohrloch (24) und die Vorsprünge (26) durch Stanzen gebildet sind.

10. Befestigungsanordnung für ein Blechbauteil (12), wobei die Befestigungsanordnung gemäß einem der vorhergehenden Ansprüche ausgebildet ist.

## Revendications

1. Agencement de montage pour un composant, l'agencement comprenant un boulon (10) avec une tête (14), une tige (16) et une partie de raccord sous-tête (18) entre eux, et un trou sensiblement cylindrique (24) dans une face du composant (12), dans lequel trou (24), la tige de boulon (16) peut être positionnée, le trou (24) ayant un diamètre de sorte que la tige de boulon (16) peut être positionnée de manière coulissante à l'intérieur de ce dernier et la partie de raccord sous-tête (18) peut être complètement contenue à l'intérieur de ce dernier, **caractérisé en ce que** l'on prévoit trois saillies espacées (26) ou plus, s'étendant généralement radialement dans le trou (24) à partir de sa circonférence, les saillies (26) étant configurées de sorte que la partie de raccord sous-tête (18) peut être mise en prise avec ces dernières lorsque la tige (16) est complètement positionnée dans le trou (24).

2. Agencement de montage selon la revendication 1, **caractérisé en ce que** les saillies (26) sont configurées de sorte que lorsque la tête de boulon (14) est poussée vers le composant (12), les saillies (26) sont déformées plastiquement par la partie de raccord sous-tête (18) se mettant en prise contre ces dernières de sorte que la face inférieure de la tête de boulon (14) peut se mettre en prise contre la face de composant (12) autour du trou (24).

3. Agencement de montage selon la revendication 1 ou 2, **caractérisé en ce que** les saillies (26) ont une section transversale sensiblement constante le long de la longueur du trou (24).

4. Agencement de montage selon l'une quelconque des revendications 1 à 3, **caractérisé en ce que** les saillies (26) sont sensiblement espacées à égale distance autour de la circonférence du trou (24).

5. Agencement de montage selon l'une quelconque des revendications précédentes, **caractérisé en ce que** quatre saillies (26) sont espacées autour de la circonférence du trou (24).

6. Agencement de montage selon l'une quelconque des revendications précédentes, **caractérisé en ce que** les saillies (26) sont sensiblement identiques entre elles.

7. Agencement de montage selon l'une quelconque des revendications précédentes, **caractérisé en ce que** le trou (24) et les saillies (26) sont formés par découpe au laser.

8. Agencement de montage selon l'une quelconque des revendications 1 à 6, **caractérisé en ce que** le trou (24) et les saillies (26) sont formés par découpe à la pince.

9. Agencement de montage selon l'une quelconque des revendications 1 à 6, **caractérisé en ce que** le trou (24) et les saillies (26) sont formés par poinçonnage.

10. Agencement de montage pour un composant de feuille (12), l'agencement de montage étant selon l'une quelconque des revendications précédentes.
